# EUROPEAN PATENT APPLICATION

(11) **EP 3 432 193 A1**
(43) Date of publication of application: **23.01.2019**
(21) Application number: 18183638.8
(22) Date of filing: 16.07.2018
(51) Int. Cl.: G06K 7/10

(54) **WIRELESS TAG READING APPARATUS**

(30) Priority: 18.07.2017 JP 2017139439
(71) Applicant: Toshiba Tec Kabushiki Kaisha, Shinagawa-ku Tokyo 141-0032 (JP)
(72) Inventor: Sakurai, Wataru, Tokyo, 141-8562 (JP)
(74) Representative: Hoffmann Eitle

(57) **Abstract**

A wireless tag reading apparatus communicates with a wireless tag attached to an object conveyed by a conveyance section. The apparatus includes a tunnel section and an antenna. The tunnel section is provided to cover an upper portion of a part of a lane of the conveyance section and the antenna. The antenna is configured to radiate radio waves to read information stored in the wireless tag. The tunnel section has a first door provided at an entrance of the tunnel section in a conveying direction, a second door provided at an exit of the tunnel section, and a third door provided between the first door and the second door of the tunnel section. The antenna is arranged in a space between the second door and the third door in the tunnel section. The first door, second door and third door is opened and closed in response to the conveyance position of the object.

## Description

### CROSS-REFERENCE TO RELATED APPLICATION

This application is based upon and claims the benefit of priority from Japanese Patent Application No. 2017-139439, filed in July 18, 2017, the entire contents of which are incorporated herein by reference.

### FIELD

Embodiments described herein relate generally to a wireless tag reading apparatus.

### BACKGROUND

In a wireless communication such as an RFID (Radio Frequency IDentifier), a technology is known for controlling a reading range of information by surrounding an antenna for radiating radio waves with radio wave reflective material.

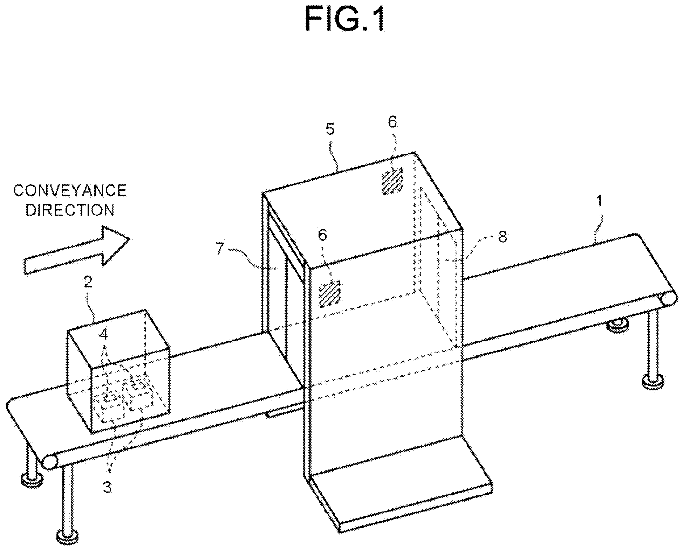

For example, as shown in Fig. 1, an antenna (reader/writer antenna for RFID) 6 is provided on an inner surface of a tunnel-gate 5 which surrounds a middle portion of a lane of a conveyance module 1 such as a conveyor and reads information stored in a wireless tag 4 attached to a product 3 contained in a package 2 that is being conveyed by the conveyance module 1. At an entrance of the tunnel gate 5, there is provided an entrance door 7 opened and closed in response to a conveyance position of the package 2. At an exit of the tunnel gate 5, there is also provided an exit door 8 opened and closed according to the conveyance position of the package 2.

### SUMMARY OF THE INVENTION

One of the objects of the present invention is to improve prior art techniques and overcome at least some of the prior art problems as for instance above illustrated.

According to a first aspect of the present invention, it is provided a wireless tag reading apparatus which communicates with a wireless tag attached to an object conveyed by a conveyance section, comprising:
a tunnel section provided to cover an upper portion of a part of a lane of the conveyance section; and
an antenna configured to radiate radio waves to read information stored in the wireless tag, wherein
the tunnel section has
   a first door, provided at an entrance of the tunnel section in a conveying direction, which is opened and closed in response to a conveyance position of the object,
   a second door, provided at an exit of the tunnel section, which is opened and closed in response to the conveyance position of the object, and
   a third door, provided between the first door and the second door of the tunnel section, which is opened and closed in response to the conveyance position of the object, wherein
   the antenna is arranged in a space between the second door and the third door in the tunnel section.

Optionally, in the wireless tag reading apparatus according to the first aspect of the invention, an inner surface of the tunnel section is made of a radio wave reflective material.

Optionally, in the wireless tag reading apparatus according to the first aspect of the invention, each of the first door, second door and third door is made of a radio wave reflective material.

Optionally, in the wireless tag reading apparatus according to the first aspect of the invention, a distance between the first door and the third door is such that the first door becomes closed while the third door is opened and vice versa.

Optionally, the wireless tag reading apparatus according to the first aspect of the invention, further comprises
a second tunnel section connected to the tunnel section, wherein
the second tunnel section has the second door provided at an entrance of the second tunnel section in the conveying direction, and a fourth door, provided at an exit of the second tunnel section, which is opened and closed in response to the conveyance position of the object.

Optionally, in the wireless tag reading apparatus according to the first aspect of the invention, an inner surface of the second tunnel section is made of a radio wave reflective material.

Optionally, the wireless tag reading apparatus according to the first aspect of the invention, further comprises
a second tunnel section connected to the tunnel section, wherein
the second tunnel section has the second door provided at an entrance of the second tunnel section in the conveying direction, and a fourth door, provided at an exit of the second tunnel section, which is opened and closed in response to the conveyance position of the object.

Optionally, in the wireless tag reading apparatus according to the first aspect of the invention, a distance between the second door and the fourth door is such that the second door becomes closed while the fourth door is opened, and vice versa.

Optionally, in the wireless tag reading apparatus according to the first aspect of the invention, each of the first door, the second door, the third door, and the fourth door is a double door opened and closed in response to the conveyance position of the object.

Optionally, in the wireless tag reading apparatus according to the first aspect of the invention, each of the first door, the second door, the third door, and the fourth door is a double-swing door.

Optionally, in the wireless tag reading apparatus according to the first aspect of the invention, each of the first door, the second door, the third door, and the fourth door is a single shutter door opened and closed in response to the conveyance position of the object.

Optionally, in the wireless tag reading apparatus according to the first aspect of the invention, each of the first door, the second door, the third door, and the fourth door is a double door opened and closed in response to the conveyance position of the object.

Optionally, in the wireless tag reading apparatus according to the first aspect of the invention, the double door and each tunnel section have a gap therebetween and a radio wave reflective material is provided in the gap.

Optionally, in the wireless tag reading apparatus according to the first aspect of the invention, each door and each tunnel section have a gap therebetween and a radio wave reflective material is provided in the gap.

Optionally, in the wireless tag reading apparatus according to the first aspect of the invention, the conveyance section includes a first conveyor between the first door and the third door, a second conveyor downstream of the second door, and an inclined member between the third door and the second door.

Optionally, in the wireless tag reading apparatus according to the first aspect of the invention, the first conveyor has a first height, the second conveyor has a second height, and the first height is greater than the second height.

Optionally, in the wireless tag reading apparatus according to the first aspect of the invention, the inclined member includes an inclined plane.

Optionally, in the wireless tag reading apparatus according to the first aspect of the invention, a height of the inclined plane at the first conveyor side is the first height, and a height of the inclined plane at the second conveyor side is the second height.

Optionally, in the wireless tag reading apparatus according to the first aspect of the invention, the antenna is disposed on at least one of an inner surface of the tunnel section or a surface of the inclined member.

Optionally, in the wireless tag reading apparatus according to the first aspect of the invention, the inclined member is made of a radio wave reflective material.

### DESCRIPTION OF THE DRAWINGS

Fig. 1 is a diagram illustrating an arrangement of a conventional wireless tag reading apparatus;
Fig. 2 is a diagram illustrating an arrangement of a wireless tag reading apparatus according to a first embodiment;
Fig. 3 is a schematic top view illustrating a tunnel section according to the first embodiment;
Fig. 4 is a diagram illustrating an arrangement of a wireless tag reading apparatus according to a second embodiment;
Fig. 5 is a schematic top view illustrating a tunnel section according to the second embodiment; and
Fig. 6 is a front view illustrating a double door according to a modification of at least one embodiment.

### DETAILED DESCRIPTION

In accordance with an embodiment, a wireless tag reading apparatus, which communicates with a wireless tag attached to an object conveyed by a conveyance section, includes a tunnel section provided to cover an upper portion of a part of a lane of the conveyance section and an antenna section configured to radiate radio waves to read information stored in the wireless tag. The tunnel section has a first door, provided at an entrance of the tunnel section in a conveying direction, which is opened and closed in response to a conveyance position of the object, a second door, provided at an exit of the tunnel section, which is opened and closed in response to the conveyance position of the object, and a third door, provided between the first door and the second door of the tunnel section, which is opened and closed in response to the conveyance position of the object. The antenna section is arranged in a space between the second door and the third door in the tunnel section.

Embodiments of a wireless tag reading apparatus are described in detail with reference to the accompanying drawings.

### (First Embodiment)

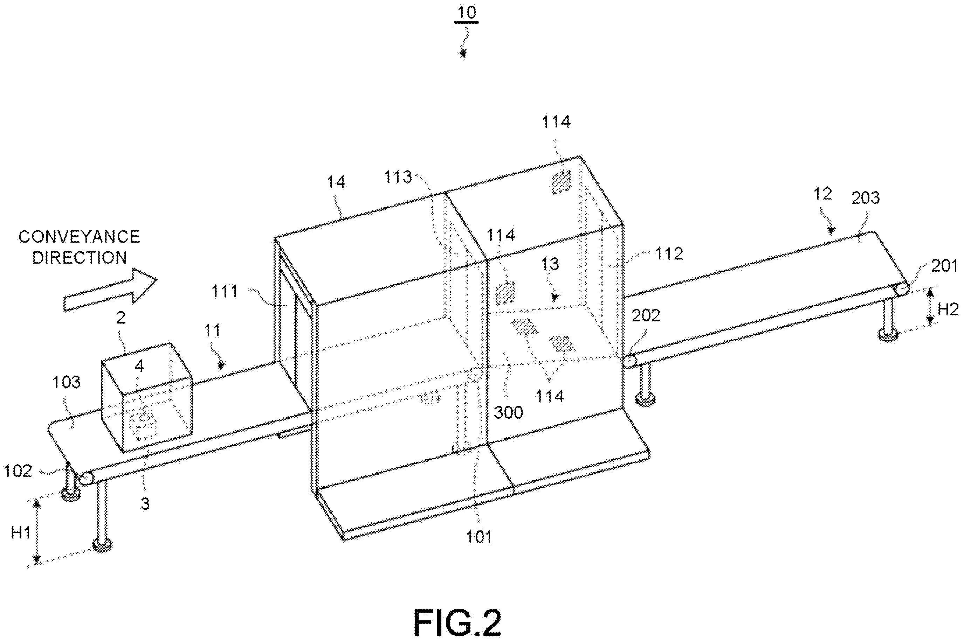

Fig. 2 is a diagram illustrating an example of an arrangement of a wireless tag reading apparatus 10 according to at least one embodiment. As shown in Fig. 2, the wireless tag reading apparatus 10 comprises a first conveyor 11, a second conveyor 12, an inclined member 13, and a tunnel section 14.

In at least one embodiment, the first conveyor 11, the second conveyor 12 and the inclined member 13 make up a "conveyance section" for conveying an object, to which a wireless tag 4 is attached, placed thereon. The "object with the wireless tag 4 (object to be conveyed)" may be a product 3 to which the wireless tag 4 is attached, or a package 2 (e.g., a cardboard) in which the product 3 with the wireless tag 4 is contained.

The first conveyor 11 is made up of a driving roller 101, a driven roller 102, and a belt 103 wound around the driving roller 101 and the driven roller 102. For example, a control device (not shown) performs control to drive a motor to rotate the driving roller 101, and in this way, an object (package 2 in the present embodiment) on the belt 103 is conveyed in a direction shown by an arrow in Fig. 2. Similarly, the second conveyor 12 is made up of a driving roller 201, a driven roller 202, and a belt 203 wound around the driving roller 201 and the driven roller 202. As described above, a control device (not shown) drives a motor to rotate the driving roller 201 and the driven roller 202 through the belt 203 and thus the package 2 on the belt 203 is conveyed in a direction shown by an arrow in Fig. 2. In the example in Fig. 2, a height HI of the first conveyor 11 is set to be higher than a height H2 of the second conveyer 12.

The inclined member 13 is interposed between the first conveyor 11 and the second conveyor 12, and has an inclined plane 300 for guiding the package 2 conveyed by the first conveyor 11 to the second conveyor 12. A height of the inclined plane 300 at the first conveyor 11 side is set to HI the same as that of the first conveyer 11 and a height thereof at the second conveyer 12 side is set to H2 the same as that of the second conveyer 12. The package 2 conveyed to the inclined member 13 by the first conveyor 11 slides down along the inclined plane 300 due to its own dead weight toward the second conveyor 12. However, embodiments are not limited to that. For example, the "conveyance section" may be made up of one conveyor without using the inclined member 13.

The tunnel section 14 is formed such that it surrounds or covers a part of the lane of the conveyance section for conveying the package 2 in which the product with the wireless tag 4 is contained thereon. The tunnel section 14 is a member through which the conveyance section extends (conveyer lane). In this embodiment, the tunnel section 14 surrounds the middle portion of the lane of the conveyance section. Specifically, the tunnel section 14 surrounds the inclined member 13 and has a hole like a tube (passage extending in the same direction as a conveying direction) through which the inclined member 13 is arranged. The inner surface (inner surface of the hole) of the tunnel section 14 is made of a radio wave reflective material. As the radio wave reflective material, for example, metal and the like is included. The shape of the cross section of the tunnel section 14 (cross-sectional shape of the hole) may be any shape, for example, a rectangle or a circle.

A first door 111 opened and closed in response to the conveyance position of the object to be conveyed is provided at the entrance (upstream side of the tunnel section 14 in the conveying direction) of the tunnel section 14. A second door 112 opened and closed in response to the conveyance position of the package 2 conveyed is provided at the exit (downstream side of the tunnel section 14 in the conveying direction) of the tunnel section 14. Further, a third door 113 opened and closed in response to the conveyance position of the package 2 is provided between the first door 111 and the second door 112 of the tunnel section 14. A portion of the tunnel section 14 between the first door 111 and the third door 113 and a portion thereof between the third door 113 and the second door 112 may be integrally formed, or may be separately formed in a connected manner.

In at least one embodiment, a distance between the first door 111 and the third door 113 is set such that the first door 111 becomes closed while the third door 113 is opened and vice versa. Specifically, the distance between the first door 111 and the third door 113 is preferably set to a value larger than the maximum size of the object to be conveyed (package 2 in the present embodiment) in the conveying direction. In this way, even if the first door 111 is opened in response to the conveyance position of the package 2, the third door 113 can be closed, and vice versa.

Each of the first door 111, the second door 112, and the third door 113 according to at least one embodiment may be a double-opened door opened and closed in response to the conveyance position of the object to be conveyed as described above. In at least one embodiment, each of the first door 111, the second door 112, and the third door 113 is a double-swing door formed in such a manner that each of the right and left doors is rotatable around a hinge. In the first door 111, an urging force for keeping the right and left doors closed is always applied to the hinge by an elastic member such as a spring. If the moving load of the object to be conveyed exceeds the urging force, the right and left doors are rotated to be opened. The same structure is applied to other doors. Each of the first door 111, the second door 112, and the third door 113 may be made of the radio wave reflective material, for example.

As shown in Fig. 2, on the inner surface of the tunnel section 14, there is provided a reader/writer antenna 114, i.e., an example of an antenna section for radiating radio waves, to read the information stored in the wireless tag 4. Specifically, the reader/writer antenna 114 is installed at a space between the second door 112 and the third door 113 (hereinafter, referred to as an "antenna installation space") at the inside of the tunnel section 14. In at least one embodiment, two reader/writer antennas 114 are installed on the inner surface of the tunnel section 14 from the third door 113 to the second door 112, and two reader/writer antennas 114 are installed on the inclined plane 300 of the inclined member 13. As being similar to the inner surface of the tunnel section 14, the inclined plane 300 is also made of the radio wave reflective material. The number and location of the reader/writer antenna 114 may be arbitrarily changed. For example, one or more reader/writer antennas 114 may be installed only on the inner surface of the tunnel section 14 from the third door 113 to the second door 112, or one or more reader/writer antennas 114 may be installed only on the inclined plane 300. In short, one or more reader/writer antennas 114 are installed in the antenna installation space between the second door 112 and the third door 113 at the inside of the tunnel section 14.

The reader/writer antenna 114 periodically radiates radio waves. The wireless tag 4 receiving radio waves performs response to send information stored therein. The information stored in the wireless tag 4 may be information for identifying the wireless tag 4 and information relating to the product 3 (product information) to which the wireless tag 4 is attached. By receiving the response from the wireless tag 4, the reader/writer antenna 114 can read the information included in the received response. For example, the reader/writer antenna 114 may include an antenna and a driving section that drives the antenna to read information stored in the wireless tag 4 and to write information to the wireless tag 4.

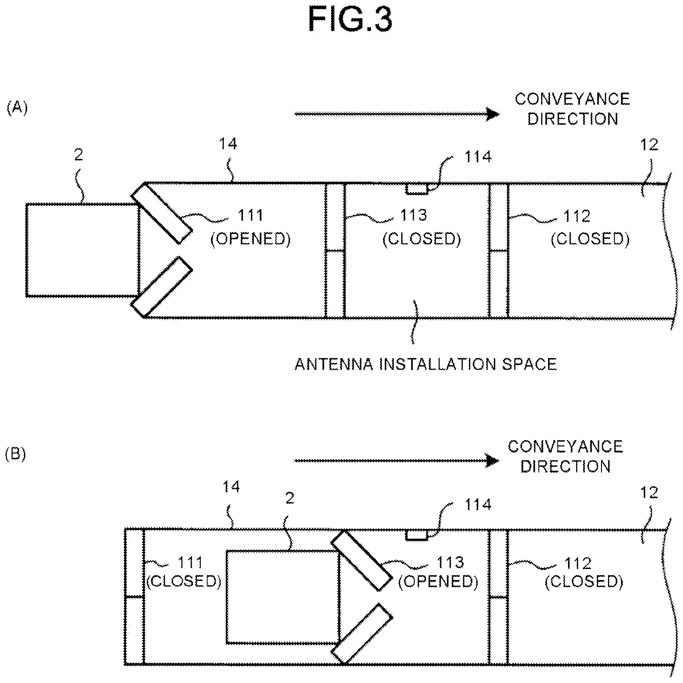

In the above-described arrangement, a case in which the package 2 in which the product 3 with the wireless tag 4 is housed is conveyed by the conveyance section is described with reference to Fig. 3. Fig. 3 is a schematic diagram illustrating an image of the tunnel section 14 viewed from the above. As shown in Fig. 3(A), if the package 2 reaches the first door 111 provided at the entrance of the tunnel section 14, the first door 111 becomes opened due to the moving load of the package 2. At this time, since both of the third door 113 and the second door 112 remain closed, radio waves radiated from the reader/writer antenna 114 cannot reach the wireless tag 4 in the package 2.

Thereafter, as shown in Fig. 3(B), if the package 2 reaches the entrance of the third door 113, the third door 113 becomes opened due to the moving load of the package 2 while the first door 111 is closed. As described above, since the first door 111 is a double-swing door, if the package 2 is conveyed to the downstream side of the conveyance position where the first door 111 is completely opened and thus, the moving load of the package 2 vanishes, the first door 111 rotates around the hinge in a direction of returning to an original position, and then the first door 111 is in a closed state. The second door 112 remains closed. At this time, since radio waves radiated from the reader/writer antenna 114 reach the wireless tag 4 in the package 2, the reader/writer antenna 114 can read the wireless tag 4. As described above, since the first door 111 and the second door 112 at this time are closed, radio waves from the reader/writer antenna 114 do not leak out of the tunnel section 14. As a result, it can increase accuracy of reading the wireless tag 4 in the tunnel section 14 (within the reading range) without reading the wireless tag 4 (wireless tag 4 beyond the reading range) at the outside of the tunnel section 14. Thereafter, the package 2 passes through the tunnel section 14 and then is conveyed by the second conveyor 12.

As described above, in at least one embodiment, the third door 113 is provided between the first door (entrance door) 111 provided at the entrance of the tunnel section 14 and the second door (exit door) 112 provided at the exit of the tunnel section 14. The reader/writer antenna 114 is provided in the antenna installation space described above between the second door 112 and the third door 113 inside the tunnel section 14. In at least one embodiment, the distance between the first door 111 and the third door 113 is set such that the first door 111 becomes closed while the third door 113 is opened and vice versa.

According to at least one embodiment, the entrance side of the antenna installation space is formed in a dual structure so that the first door 111 installed at the entrance of the tunnel section 14 is closed even if the third door 113 installed at the entrance of the antenna installation space becomes opened due to the moving load of the package 2 conveyed by the conveyance section. As a result, even if the object to be conveyed reaches the entrance of the antenna installation space and the third door 113 is opened, radio waves radiated from the reader/writer antenna 114 can be prevented from leaking out of the tunnel section 14. Therefore, it is can improve the accuracy of reading the wireless tag 4 within the reading range without reading the wireless tag 4 located outside the first door, i.e., beyond the reading range.

### (Second Embodiment)

Next, a second embodiment is described. The present embodiment (second embodiment) is different from the above-described first embodiment in that a second tunnel section connected to the tunnel section 14 described above is additionally provided. The description thereof is made in detail below, while the description of the components common to the first embodiment is omitted as appropriate.

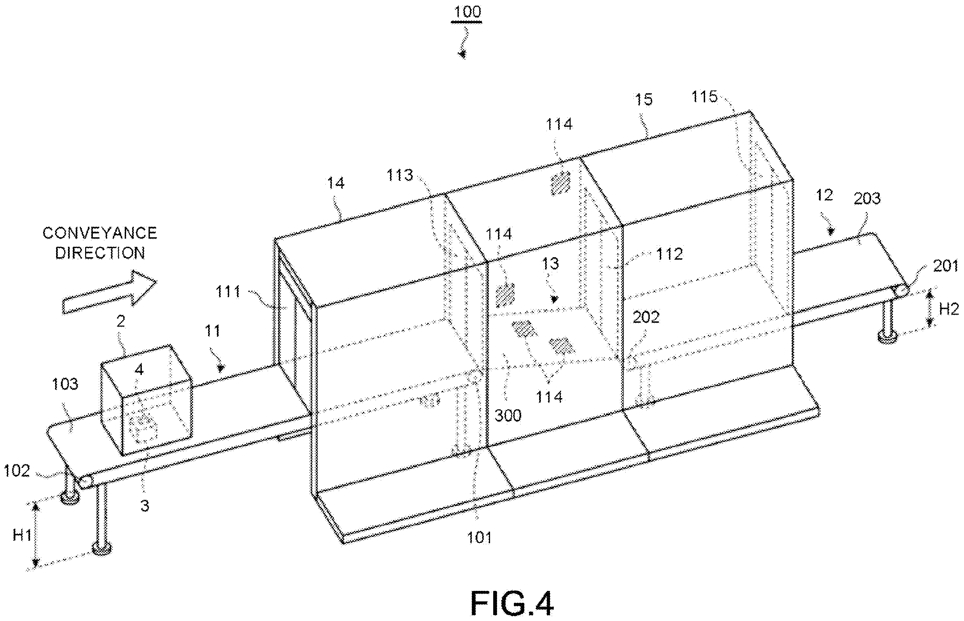

Fig. 4 is a diagram illustrating an example of the arrangement of a wireless tag reading apparatus 100 according to the second embodiment. As shown in Fig. 4, the wireless tag reading apparatus 100 further includes a second tunnel section 15 connected to the tunnel section 14 described above. The second tunnel section 15 is installed so as to surround the upper portion of a part of the lane of the conveyance section. The second tunnel section 15 is provided at the downstream side of the tunnel section 14 in the conveying direction. The above-mentioned second door 112 is provided at the entrance of the second tunnel section 15 in the conveying direction of the second tunnel section 15. A fourth door 115 opened and closed in response to the conveyance position of the object is provided at the exit of the second tunnel section 15 (downstream side of the second tunnel section 15 in the conveying direction). The fourth door 115 is a double door opened and closed according to the moving load of the object to be conveyed, and like other doors, the fourth door 115 may have a structure of a double-swing door. The fourth door 115 may be made of the radio wave reflective material as well.

In at least one embodiment, the distance between the second door 112 and the fourth door 115 is set such that the second door 112 becomes closed while the fourth door 115 is opened and vice versa. Specifically, it is preferable that the distance between the second door 112 and the fourth door 115 is set to a value larger than the maximum size of the object to be conveyed (package 2) in the conveying direction. In this way, even if the second door 112 is opened in response to the conveyance position of the package 2, the fourth door 115 can be closed, and vice versa.

In at least one embodiment, the inner surface of the second tunnel section 15 (the inner surface of the hole) is made of the radio wave reflective material. The tunnel section 14 and the second tunnel section 15 may be integrally formed or separately formed in a connected manner.

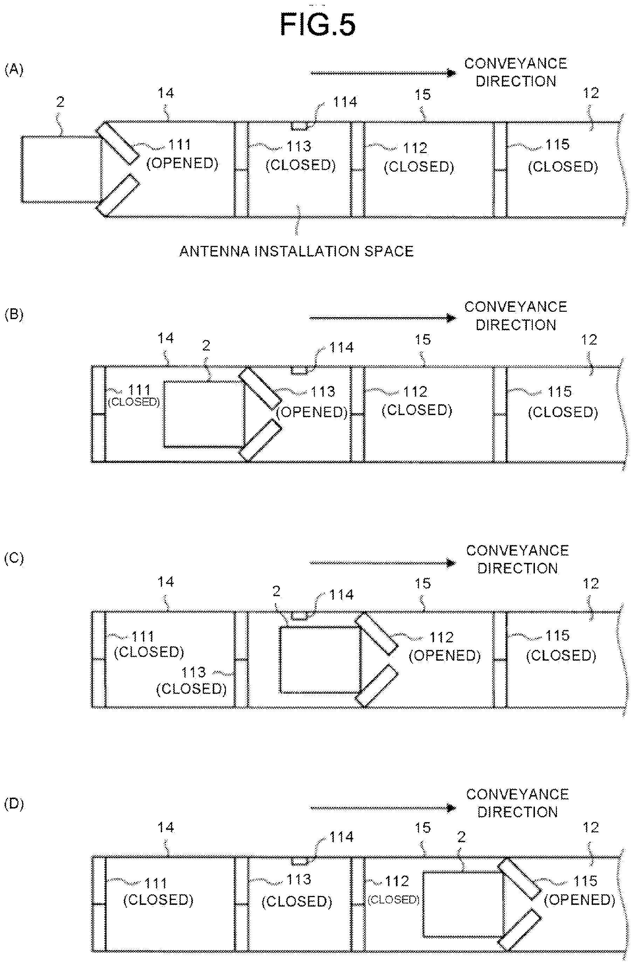

With the above arrangement, a case in which the package 2 containing the product 3 to which the wireless tag 4 is attached is conveyed by the conveyance section is described with reference to Fig. 5. Fig. 5 is a schematic diagram illustrating an image of the tunnel section 14 and the second tunnel section 15 viewed from the above. As shown in Fig. 5(A), when the package 2 reaches the first door 111 provided at the entrance of the tunnel section 14, the first door 111 becomes opened due to the moving load of the package 2. At this time, since both of the third door 113 and the second door 112 remain closed, radio waves radiated from the reader/writer antenna 114 cannot reach the wireless tag 4 in the package 2.

Thereafter, as shown in Fig. 5(B), when the package 2 reaches the entrance of the third door 113, the third door 113 becomes opened due to the moving load of the package 2 while the first door 111 becomes closed. The second door 112 remains closed. At this time, since radio waves radiated from the reader/writer antenna 114 reach the wireless tag 4 in the package 2, the reader/writer antenna 114 can read the wireless tag 4. As described above, since the first door 111 and the second door 112 at this time are closed, radio waves from the reader/writer antenna 114 do not leak out of the tunnel section 14.

Thereafter, as shown in Fig. 5(C), when the package 2 reaches the entrance of the second door 112, the second door 112 becomes opened due to the moving load of the package 2. At this time, the fourth door 115 provided at the exit of the second tunnel section 15 remains closed. At this time also, for example, in the tunnel section 14, even if the third door 113 provided at the upstream side of the second door 112 in the conveying direction is opened, the first door 111 provided at the entrance of the tunnel section 14 becomes closed. In other words, if the tunnel section 14 and the second tunnel section 15 connected with each other are regarded as an integrated tunnel section, an entrance (first door 111) and an exit (fourth door 115) of the tunnel section are closed, and therefore, it can prevent radio waves from the reader/writer antenna 114 from leaking out of the tunnel section.

Further thereafter, as shown in Fig. 5 (D), when the package 2 passes through the second tunnel section 15 and reaches the entrance of the fourth door 115, the fourth door 115 becomes opened due to the moving load of the package 2 while the second door 112 provided at the entrance (exit of the tunnel section 14) of the second tunnel section 15 becomes closed. At this time, the third door 113 provided at the upstream side of the second door 112 in the conveying direction is also closed, and the above-described antenna installation space becomes a sealed space. Therefore, the sealed space can also prevent radio waves from the reader/writer antenna 114 from leaking out of the tunnel section.

In the second embodiment, each of the entrance side and the exit side of the antenna installation space has a dual structure, and in this way, radio waves from the reader/writer antenna 114 installed in the antenna installation space can be reliably prevented from leaking out of the tunnel section over the entire period from entering the tunnel section to exiting the tunnel section (if considering tunnel section 14 and the second tunnel section 115 as an integrated tunnel section).

Modifications are described below. Modifications described below can be combined with any of the above-described embodiments.

### (1) First Modification

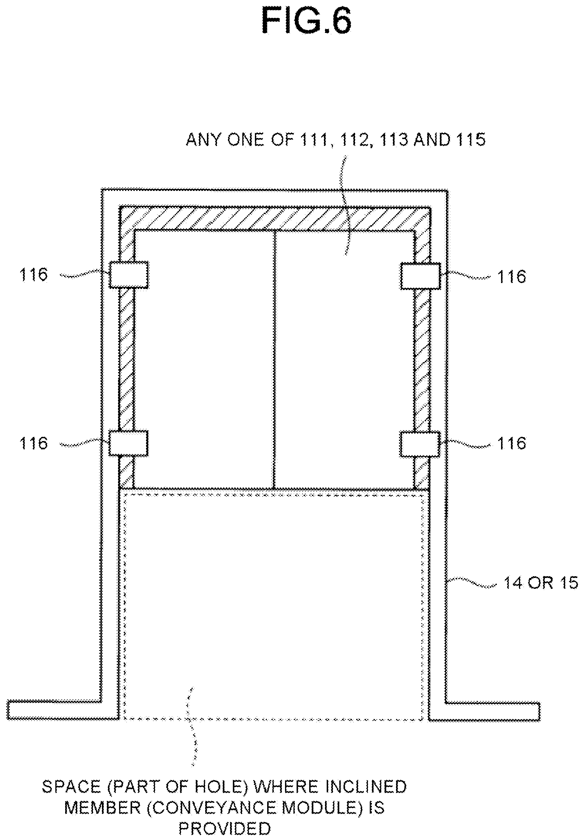

For example, the radio wave reflective material may be provided in a gap of a double door. Fig. 6 is a front view of one of the first door 111, the second door 112, the third door 113, and the fourth door 115. If the first door 111, the second door 112, the third door 113, and the fourth door 115 are not distinguished from each other, they are simply referred to as a "door". In Fig. 6, each of the right and left doors making up the door (double door) is rotatable about a hinge 116. The hatched area in Fig. 6 indicates a gap between the inner surface (inner wall) of the tunnel section 14 or the second tunnel section 15 and the door, and the radio wave reflective material is provided in the hatched area. Therefore, the leakage of radio waves radiated from the reader/writer antenna 114 to the outside of the tunnel section 14 or the second tunnel section 15 can be prevented.

### (2) Second Modification

In each of the above-described embodiments, the door is a double-swing door opened and closed in response to the conveyance position of the object to be conveyed, but the door is not limited to this. For example, the door may be a sliding type double door or a single shutter door. In this modification, it is preferable that the position of the object to be conveyed is sensed and opening and closing of the door is automatically controlled in response to the sensed position. In short, it is enough if the door is opened and closed in response to the conveyance position of the object.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. A wireless tag reading apparatus which communicates with
a wireless tag attached to an object conveyed by a conveyance section, comprising:
a tunnel section provided to cover an upper portion of a part of a lane of the conveyance section; and
an antenna configured to radiate radio waves to read information stored in the wireless tag, wherein
the tunnel section has
a first door, provided at an entrance of the tunnel section in a conveying direction, which is opened and closed in response to a conveyance position of the object,
a second door, provided at an exit of the tunnel section, which is opened and closed in response to the conveyance position of the object, and
a third door, provided between the first door and the second door of the tunnel section, which is opened and closed in response to the conveyance position of the object, wherein
the antenna is arranged in a space between the second door and the third door in the tunnel section.

2. The wireless tag reading apparatus according to claim 1, wherein an inner surface of the tunnel section is made of a radio wave reflective material and/or wherein each of the first door, second door and third door is made of a radio wave reflective material.

3. The wireless tag reading apparatus according to any of claims 1 to 2, wherein
a distance between the first door and the third door is such that the first door becomes closed while the third door is opened and vice versa.

4. The wireless tag reading apparatus according to any of claims 1 to 3, further comprising:
a second tunnel section connected to the tunnel section, wherein
the second tunnel section has the second door provided at an entrance of the second tunnel section in the conveying direction, and a fourth door, provided at an exit of the second tunnel section, which is opened and closed in response to the conveyance position of the object.

5. The wireless tag reading apparatus according to claim 4, wherein an inner surface of the second tunnel section is made of a radio wave reflective material.

6. The wireless tag reading apparatus according to any of claims 4 to 5, wherein
a distance between the second door and the fourth door is such that the second door becomes closed while the fourth door is opened, and vice versa.

7. The wireless tag reading apparatus according to any of claims 4 to 6, wherein
each of the first door, the second door, the third door, and the fourth door is a double door opened and closed in response to the conveyance position of the object.

8. The wireless tag reading apparatus according to any of claims 4 to 7, wherein
each of the first door, the second door, the third door, and the fourth door is a double-swing door.

9. The wireless tag reading apparatus according to any of claims 4 to 6, wherein
each of the first door, the second door, the third door, and the fourth door is a single shutter door opened and closed in response to the conveyance position of the object.

10. The wireless tag reading apparatus according to any of claims 7 and 8, wherein
the double door and each tunnel section have a gap therebetween and a radio wave reflective material is provided in the gap.

11. The wireless tag reading apparatus according to any of claims 1 to 10, wherein
each door and each tunnel section have a gap therebetween and a radio wave reflective material is provided in the gap.

12. The wireless tag reading apparatus according to any of claims 1 to 11, wherein the conveyance section includes a first conveyor between the first door and the third door, a second conveyor downstream of the second door, and an inclined member between the third door and the second door, and wherein preferably the first conveyor has a first height, the second conveyor has a second height, and the first height is greater than the second height, and further preferably wherein the inclined member includes an inclined plane.

13. The wireless tag reading apparatus according to claim 12, wherein a height of the inclined plane at the first conveyor side is the first height, and a height of the inclined plane at the second conveyor side is the second height.

14. The wireless tag reading apparatus according to any of claims 12 to 13, wherein the antenna is disposed on at least one of an inner surface of the tunnel section or a surface of the inclined member.

15. The wireless tag reading apparatus according to any of claims 12 to 14, wherein the inclined member is made of a radio wave reflective material.
